# DEMANDE DE BREVET EUROPEEN

(11) **EP 0 885 687 A1**
(43) Date de publication de la demande: **23.12.1998**
(21) Numéro de dépôt: 98401057.9
(22) Date de dépôt: 30.04.1998
(51) Int. Cl.: B23Q 7/02, B65G 1/04, B23P 19/00

(54) **Présentoir de demi-coussinets pour installation de garnissage des paliers de vilebrequin ou têtes de bielles d'un moteur thermique**

(30) Priorité: 20.06.1997 FR 9707699
(71) Demandeur: RENAULT AUTOMATION, 92109 Boulogne Billancourt (FR)
(72) Inventeur: Blondeau, Jean-Marc, 91330 Yerres (FR)
(74) Mandataire: Fernandez, Francis Lionel

(57) **Abrégé**

Présentoir de demi-coussinets (5) pour paliers de vilebrequin en tête de bielles d'un moteur thermique comportant un mât central vertical (10) monté à rotation autour de son axe sur un socle fixe inférieur (11) et une pluralité de logements (12) régulièrement répartis autour du mât (10) et solidaires de ce dernier, chaque logement étant délimité par des parois formant un caisson allongé dont l'axe longitudinal est coplanaire avec l'axe du mât et incliné sur celui-ci en divergeant vers le bas et dont l'extrémité supérieure (14) est ouverte, l'extrémité inférieure (16) d'au moins l'une des parois du caisson étant située à distance d'une butée d'appui (15) s'étendant transversalement à l'axe du logement.

## Description

Au cours du montage et de l'assemblage des moteurs thermiques, une série d'opérations consiste à pourvoir les paliers de vilebrequin prévus dans le bloc moteur et les têtes de bielles, de coussinets destinés à former les portées de guidage de la rotation relative de ces pièces.

Chaque coussinet se présente sous forme de deux demi-coussinets dont l'un est placé dans le demi-palier ménagé dans le carter moteur ou la bielle et l'autre dans le chapeau correspondant.

L'équipement des paliers est réalisé au moyen d'installations automatiques de montage. Celles-ci mettent en oeuvre des robots qui assurent la manutention de chaque demi-coussinet entre des postes de présentations où ceux-ci sont en attente et, soit directement les demi-paliers qui doivent les recevoir, soit un préhenseur intermédiaire au moyen duquel on assure le positionnement relatif final des demi-coussinets afin qu'ils puissent être présentés en bloc à la série de palier à équiper.

La fourniture des demi-coussinets à ces installations est réalisée au moyen de barquettes en matière plastique ou en carton dans lesquelles les demi-coussinets sont rangés debout les uns derrière les autres (si la barquette est horizontale) la surface convexe du dos de chaque demi-coussinet pénétrant partiellement dans la surface concave du demi-coussinet adjacent.

Dans les installations actuelles, l'acheminement de ces barquettes aux postes d'attente est réalisé au moyen de transporteurs motorisés ou fonctionnant par gravité. A l'extrémité de chaque transporteur, il existe un organe basculeur qui redresse chaque barquette de manière que les demi-coussinets qu'elle contient forment une pile quasiment verticale dans laquelle chaque demi-coussinet présente sa convexité tournée vers le haut.

On s'est rendu compte que de tels dispositifs d'amenée et de présentation des coussinets comportait des inconvénients car leur fonctionnement est très dépendant des frottements incontrôlés entre les organes transporteurs et les barquettes. En outre, le mécanisme de basculement de chaque barquette demande une motorisation qui est une source de défaillance du système qui nuit à la régularité du fonctionnement de l'installation.

La présente invention, née de ces constatations, a pour but de remédier à ces risques de défaillance au moyen d'un dispositif de présentation des demi-coussinets aux robots d'une installation de montage, essentiellement statique.

A cet effet l'invention a pour objet, dans une installation de distribution et de mise en place de coussinets pour paliers de vilebrequin ou tête de bielles d'un moteur thermique au moyen d'au moins un robot, un présentoir de demi-coussinets qui comporte un mât central vertical monté à rotation autour de son axe sur un socle fixe et une pluralité de logements régulièrement répartis autour du mât et solidaires de ce dernier, chaque logement étant délimité par des parois formant un caisson allongé dont l'axe longitudinal est coplanaire avec l'axe du mât et incliné sur celui-ci en divergeant vers le bas et dont l'extrémité supérieure est ouverte, l'extrémité inférieure d'au moins l'une de ses parois étant est située à distance d'une butée d'appui s'étendant transversalement à l'axe du logement.

Il est ainsi possible de loger manuellement dans chacun des caissons du présentoir une barquette de demi-coussinets en l'y glissant par son extrémité supérieure jusqu'à ce qu'elle soit retenue dans le caisson par la butée.

Le demi-coussinet inférieur est alors visible au-delà de l'extrémité inférieure de ladite paroi du caisson. Il est possible de l'extraire de la barquette sous cette extrémité au moyen d'une pince dont est équipé le robot, l'ensemble de la pile descendant alors d'un cran pour rendre visible de demi-coussinet immédiatement adjacent à celui qui vient d'être retiré.

L'inclinaison du caisson de réception de la barquette n'est pas strictement nécessaire et ce caisson pourrait être parallèle à l'axe du mât. Cette inclinaison est cependant avantageuse car elle facilite l'introduction de la barquette dans son logement. En effet, tant que la barquette est inclinée, les demi-coussinets qu'elle contient sont maintenus en appui par l'une de leurs extrémités axiales contre le fond de la barquette sous l'effet de la gravité. Une position strictement verticale en revanche autoriserait des glissements relatifs des demi-coussinets dans la barquette qui, se décalant, tendrait à bloquer l'introduction de la barquette dans le caisson voire provoquerait la chute intempestive des pièces conduisant immédiatement à leur rebut.

Dans un mode de réalisation préféré, le caisson possède deux parois parallèles à l'axe de mât et deux parois perpendiculaires aux précédentes dont celle la plus éloignée de l'axe du mat est ouverte au moins à son extrémité inférieure.

Cette disposition est avantageuse car elle permet de ne découvrir qu'un seul demi-coussinet à la base du logement du présentoir tout en autorisant le passage de la pince dont une mâchoire doit être introduite entre la surface convexe de ce demi-coussinet et celle concave de celui qui le surmonte. Lors de l'extraction du demi-coussinet pincé, le suivant est maintenu bloqué par la paroi frontale du caisson contre l'effort d'entraînement par frottement qu'il subit. L'ouverture en question peut être totale sur toute la longueur de la face frontale du caisson. Dans ce cas elle permet une visualisation de l'ensemble de la pile de pièces ce qui est avantageux pour l'opérateur qui, ayant été alerté par le robot d'une absence de coussinet à la base de la pile peut ainsi distinguer entre un logement vide ou un coincement intempestif ayant empêché la descente des pièces.

Bien entendu la section interne du caisson sera proportionnée à celle externe de la barquette et la largeur de l'ouverture de la paroi frontale du caisson sera inférieure au diamètre extérieur des demi-coussinets de manière à pouvoir les retenir dans la barquette.

De même, le bord inférieur de la paroi frontale du caisson sera de forme adaptée (en arc de cercle) pour masquer au maximum le demi-coussinet surmontant celui à extraire. La distance séparant ce bord de la butée d'appui de la barquette est également adaptée à la dimension du demi-coussinet et à l'épaisseur de la paroi latérale de la barquette.

Par ailleurs le présentoir selon l'invention comporte entre le mât et le socle (ou toute pièce solidaire du socle) un organe d'indexation débrayable. Ainsi, par exemple, si le présentoir comporte huit logements, le mât pourra prendre huit positions angulaires indexées par rapport au socle de manière que chacun des logements soit à tour de rôle dans une position spatiale déterminée (dans un système de référence du robot) correspondant à la position que le robot doit atteindre par programmation pour extraire un ou des demi-coussinets.

Lorsqu'un logement est vide, on débraye l'organe d'indexation et on commande le pivotement du mât du présentoir (d'un huitième de tour par exemple) pour qu'un logement rempli soit dans la position que le robot peut atteindre.

Les moyens pour assurer ce pivotement et le débrayage préalable de l'organe d'indexation peuvent être le robot lui-même ou des actionneurs séparés de ce dernier mais commandés en réponse à un détecteur de présence de demi-coussinet entre les mâchoires d'une pince.

D'autres caractéristiques et avantages ressortiront de la description donnée ci-après d'un mode de réalisation de l'invention.

Il sera fait référence aux dessins annexés parmi lesquels :
- la figure 1 est un schéma d'une barquette remplie de demi-coussinets,
- la figure 2 est une vue schématique en coupe axiale d'un présentoir selon l'invention,
- la figure 3 est une vue de détail d'un logement du présentoir.

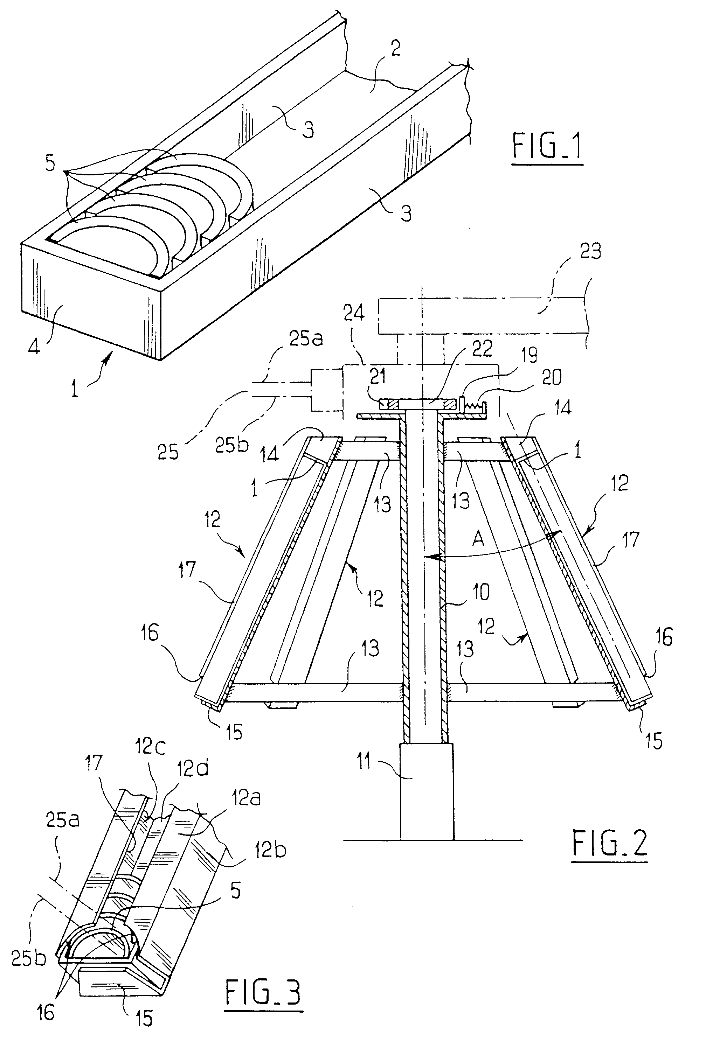

La barquette 1 représentée partiellement à la figure 1 se présente comme une boîte avec un fond 2 des parois latérales 3 et des parois d'extrémité 4 (une seule est représentée). Cette boîte est ouverte frontalement et contient des demi-coussinets 5 placés côte à côte avec leur direction axiale perpendiculaire au fond 2.

Le présentoir représenté à la figure 2 comporte Un mât vertical 10 -ici tubulaire- monté à rotation sur un socle rixe 11 -ici un axe de pivot- auquel mât sont fixés des logements inclinés 12 par des entretoises radiales 13. Dans le cas de la figure, huit logements 12 sont régulièrement répartis autour du mât 10. L'angle A de leur inclinaison sur l'axe du mât 10 est compris entre 0 et 30 degrés en divergeant vers le bas.

Chaque logement se présente sous la forme d'un caisson dont la section transversale intérieure est adaptée pour recevoir une barquette 1. L'extrémité supérieure 14 de chaque caisson 12 est ouverte de manière à permettre l'introduction de la barquette qui peut glisser à l'intérieur du caisson jusqu'à ce que sa paroi 4 d'extrémité vienne au contact d'une butée inférieure 15 distante de l'extrémité inférieure du caisson ou plus exactement dans le cas des figures du bord inférieur 16 de la paroi frontale 12a du caisson.

En effet, chaque caisson 12 comporte deux parois latérales 12b et 12c parallèles à l'axe du mât et deux parois transversales 12a et 12b perpendiculaires à ces parois latérales dont l'une, la plus éloignée 12a de l'axe du mât, constitue une paroi frontale terminée par le bord inférieur 16.

Dans le mode de réalisation représente, le bord 16 de la paroi 12a est en forme de demi-cercle qui permet de découvrir la totalité du demi-coussinet 5 inférieur contenu dans la barquette 1 tout en masquant presque totalement le demi-coussinet qui le surmonte. La distance entre le butée 15 et le bord 16 doit être telle qu'une extraction du demi-coussinet 5 découvert soit possible perpendiculairement à la paroi frontale 12a du caisson.

Dans le cas des figures, la butée 15 est formée par un retour du fond du caisson. Cette butée peut être réalisée de manière indépendante de ce caisson, portée directement, par exemple, par une entretoise inférieure 13, le caisson ayant alors une extrémité droite distante de cette butée pour que l'extraction susdite soit possible.

La paroi frontale 12a du caisson est pourvue d'une fente 17 s'étendant sur toute sa longueur qui permet de découvrir partiellement tous les demi-coussinets contenus dans le logement tout en conservant à la paroi 12a sa fonction de retenue de ceux-ci contre une extraction frontale.

Dans une variante non représentée la fente 17 pourrait se résumer à une encoche inférieure dont la longueur, au-dessus du bord 16 permettrait de découvrir uniquement l'espace intercalaire entre les deux demi-coussinets inférieurs, pour les raisons données ci-après.

En partie supérieure, le mât 10 est pourvu d'un plateau 18 porteur d'un doigt 19 de verrouillage coulissant radialement et susceptible d'être engagé par un ressort 20 dans des encoches périphériques 21 ménagées dans un second plateau 22 solidaire du socle 11. Le doigt 19 et le ressort 20 constituent un mécanisme d'indexation de la position angulaire du mât autour de son axe dans un référentiel fixe lié au socle et à un robot de manutention 23 associé au poste d'attente de coussinets que constitue, dans l'installation de pose, le présentoir. La représentation donnée ci-dessus de ce mécanisme d'indexation n'est pas limitative et d'autres dispositifs peuvent être prévus par l'homme de métier à d'autres endroits.

Le robot représenté schématiquement par les traits mixtes 23 possède de manière connue une main 24 qui porte au moins une pince 25 avec une mâchoire supérieure 25a et une mâchoire inférieure 25b. En réalité, perpendiculairement au plan de la figure, le robot porte plusieurs pinces côte à côte pour extraire successivement plusieurs demi-coussinets d'un logement 12.

En service, la main 24 du robot est placée en regard de l'extrémité inférieure d'un logement 12 (par exemple celui de droite de la figure 2) et les deux mâchoires 25a et 25b sont introduites à la base de ce logement de part et d'autre du dernier demi-coussinet 5 comme indiqué figure 3. On comprend ainsi la fonction de la fente (ou encoche) 17 qui permet le passage de la mâchoire 25a au travers de la surface frontale 12a du caisson.

Le demi-coussinet 5 pincé est donc extrait de la barquette, la pile qu'elle contient descend d'un cran et une pince adjacente de la même main de robot vient prendre en charge le demi-coussinet suivant, de la même manière.

Si l'une des pinces se referme sur rien, un détecteur d'absence de demi-coussinet prévu entre ses mâchoires permet la mise en service d'un actionneur qui libère l'indexation du mât 10 et fait tourner ce dernier d'un huitième de tour. La pince peut alors se présenter à la base d'un autre logement du présentoir qui est normalement chargé.

Dans le cas, schématiquement représenté, de la figure 2 l'actionneur susdit est le robot lui-même. Par exemple en réponse au signal d'absence, la main 24 est placée au-dessus du mât 10 pour coiffer les plateaux. Par des moyens non représentés elle est alors capable de libérer l'indexation, de faire pivoter le mât de la valeur angulaire désirée et de remettre en service l'indexation. Cette opération terminée, la main se replace en regard de l'extrémité inférieure du nouveau logement (par hypothèse chargé) pour en extraire un demi-coussinet.

Si dans ce cas une nouvelle absence de coussinet est détectée, le robot émet un signal d'alerte pour qu'un opérateur intervienne soit pour regarnir le magasin tournant que constitue le présentoir, soit pour débloquer une pile coincée ne pouvant plus descendre sous l'effet de la gravité. Les interventions de l'opérateur sur le site d'évolution du robot seront mise en sécurité par des dispositions connues du genre barrière de sécurité immatérielle qui inhiberont la totalité ou certains des mouvements du robot.

Dans la plupart des cas cependant, cette situation extrême ne sera pas atteinte soit parce qu'une détection de préalerte aura été installée sur le logement derrière lequel il y aurait un magasin vide, soit parce que l'opérateur procède à un regarnissage périodique des présentoirs. A ce propos, on notera un avantage du présentoir de l'invention : le robot y accède dans une zone délimitée et fixe dans l'espace ce qui libère notamment la zone diamétralement opposée dans laquelle l'opérateur peut évoluer en toute sécurité pour recharger périodiquement le présentoir alors que le robot est en opération.

## Revendications

1. Dans une installation de distribution et de mise en place de coussinets pour paliers de vilebrequin en tête de bielles d'un moteur thermique au moyen d'au moins un robot, un présentoir de demi-coussinets (5) caractérisé en ce qu'il comporte un mât central vertical (10) monté à rotation autour de son axe sur un socle fixe inférieur (11) et une pluralité de logements (12) régulièrement répartis autour du mât (10) et solidaires de ce dernier, chaque logement étant délimité par des parois formant un caisson allongé dont l'axe longitudinal est coplanaire avec l'axe du mât et incliné sur celui-ci en divergeant vers le bas et dont l'extrémité supérieure (14) est ouverte, l'extrémité inférieure (16) d'au moins l'une des parois du caisson étant située à distance d'une butée d'appui (15) s'étendant transversalement à l'axe du logement.

2. Présentoir selon la revendication 1, caractérisé en ce que le caisson possède deux parois (12b, 12c) parallèles à l'axe de mât (10) et deux parois (12a, 12d) perpendiculaires aux précédentes dont celle (12a) la plus éloignée de l'axe du mât (10) est ouverte (17) au moins à son extrémité inférieure.

3. Présentoir selon la revendication 1 ou la revendication 2, caractérisé en ce qu'il comporte entre le mât (10) et le socle (11) un organe (19, 20) d'indexation débrayable.

4. Présentoir selon l'une des revendications précédentes, caractérisé en ce que les demi-coussinets (5) étant conditionnés côte à côte dans une barquette (1) de manière connue, la section interne du caisson (12) est sensiblement identique à la section externe de la barquette (1) par un plan transversal.

5. Présentoir selon l'une des revendications précédentes caractérisé en ce que le bord (16) inférieur de la paroi frontale (12a) du caisson est de forme sensiblement circulaire.

6. Installation mettant en oeuvre le présentoir selon la revendication 3 et un robot (23) de manutention pourvu d'une pluralité de pinces (25) de préhension des demi-coussinets (5), caractérisée en ce que chaque pince est munie d'un détecteur de présence d'un coussinet entre ses mâchoires (25a, 26b) qui appartient à une unité de commande de moyens d'entraînement en pivotement du présentoir (10, 12) et du débrayage de l'organe (19, 20) d'indexation.

7. Installation selon la revendication 6, caractérisée en ce que les moyens d'entraînement en pivotement du présentoir (10, 12) et de débrayage des organes d'indexation (19, 20) sont constitués par le robot (23) lui-même.
